# EUROPEAN PATENT APPLICATION

(11) **EP 4 817 844 A1**
(43) Date of publication of application: **07.10.2026**
(21) Application number: 26170690.7
(22) Date of filing: 02.04.2026
(51) Int. Cl.: B29C 48/76, B29C 48/14, B29C 48/285, B29C 48/92, B29K 105/26

(54) **APPARATUS FOR DEGASSING MOLTEN PLASTIC MATERIAL AND ASSOCIATED METHOD FOR CONTROLLING ITS OPERATION**

(30) Priority: 03.04.2025 IT 202500007095
(71) Applicant: Gamma Meccanica S.P.A., 42021 Bibbiano (Frazione Ghiardo) (IT)
(72) Inventor: BOVIS, Paolo, 42122 REGGIO EMILIA (IT); BURINI, Andrea, 42021 BIBBIANO RE (IT)
(74) Representative: Modiano, Micaela Nadia

(57) **Abstract**

An apparatus (1) for degassing molten plastic material, which comprises:
- a treatment chamber (2) provided with at least one entry port (3) associable with supply means (4) for a flow of molten plastic material containing a gaseous component, at least one exit port (5) for the material and at least one suction opening (6) for the at least partial suction of the gaseous component which is in fluid communication with means for applying a controlled pressure, the molten plastic material being in transit through the treatment chamber (2) from the at least one entry port (3) toward the at least one exit port (5) along a first transit direction (D1) and the at least one suction opening (6) being interposed between the ports along the first transit direction (D1), and
- extraction means (7) for the molten plastic material which are associated downstream of the at least one exit port (5) for removing the material along a second transit direction (D2), and which comprise a substantially cylindrical jacket (8) extending along the second transit direction (D2) and provided with at least one entry opening (9) which is associated in communication with the at least one exit port (5) and at least one exit opening (10), a transfer screw (11) for the molten plastic material, which is supported in rotation about its own longitudinal axis inside the jacket (8) between the entry opening (9) and the exit opening (10), and rotational actuation means (12) for the screw, an annular channel (13) being defined between the outer surface of the transfer screw (11) and the inner wall of the jacket (8) for the passage of the molten plastic material from the entry opening (9) towards the exit opening (10) along the second transit direction (D2); and
detection means (14) for a measured value (P_{MES}) referring to the pressure of the molten plastic material inside the annular channel (13), which are functionally associated in input with electronic management and control means adapted to compare the measured value (P_{MES}) with a reference value (P_{REF}).

## Description

The present invention relates to an apparatus for degassing molten plastic material and an associated method for controlling operation.

In the sector of recycling plastic material originating from production discards or from the post-consumption supply chain, plants are known for forming granules of recycled material which have, generally, a first and a second stage of extrusion, between which an apparatus is interposed for degassing the molten plastic material in output from the first stage of extrusion.

The purpose of such degassing apparatus is to eliminate, or at least considerably reduce, the gaseous component contained inside the material. If the gas bubbles are not correctly eliminated, in fact, they will compromise the quality of the granules obtained and, therefore, the possibility of reusing the material.

The amount of gas produced within the mass of molten plastic material in the first stage of extrusion increases as a function of the humidity of the material, of the amount of impurities contained in it, and of the percentage of printing to which it has previously been subjected.

It must be considered, in fact, that material to be recycled is often stored outdoors, where it is exposed to rainwater and humidity, which are at least partially taken along with the material into the first stage of extrusion. Furthermore, the material to be recycled, especially if originating from the post-consumption supply chain, can undergo preliminary treatments of washing, which increase the content of water and humidity taken into the first stage of extrusion if the material is not sufficiently dried and dehumidified. The material to be recycled can also contain pollutant substances (e.g. paper, wood, etc.) or printing inks which tend to burn in the first stage of extrusion, in turn producing gas.

It also needs to be considered that the material to be recycled has a heterogeneous composition such that, in order to obtain its complete liquefaction, it is necessary to process the entire mass of material at a temperature at least equal to the melting temperature of the high-melting polymeric materials, i.e. the materials with the highest melting temperature. At such processing temperature the low-melting polymeric materials begin to deteriorate, producing additional gas.

Turning to the degassing apparatus, two versions are substantially known, one arranged in line with the first and the second stage of extrusion, and one separately from them.

In the first case, a frame defines a longitudinally-extended jacket inside it, inside which in turn an extrusion screw is supported which is divided into three differently-shaped sections, which are, in order, a first section for compression and transfer, a second section for transfer, and a third section for compression and transfer. These machines are generally known as single-screw extruders, wherein the first section of the screw constitutes the first stage of liquefaction, while the second and third sections of the screw make up the second stage of degassing and liquefaction. The material is introduced into the jacket at the first section of the extrusion screw and exits at the third section of the screw.

Between the outer surface of the extrusion screw and the inner wall of the jacket, an annular channel is defined for the passage of the material, which at the first and third sections of the extrusion screw acts as a plasticization chamber and at the second section of the screw acts as a degassing chamber.

At the degassing chamber, the jacket is provided with at least one opening which is in communication with suction means, for the application of a controlled pressure that is less than or equal to the pressure that is established in the plasticization chambers, for example less than or equal to the ambient pressure. During the transition through the degassing chamber, the gaseous component held in the mass of molten plastic material tends to be extracted and removed from the mass by virtue of the partial vacuum present in the degassing chamber.

Alternatively, plants are known which are similar to the above description, but wherein the first stage of liquefaction is constituted by a first screw extruder in which the screw incorporates the first section, and the second stage of degassing and extrusion is constituted by a second screw extruder in which the screw incorporates the second and third sections referred to above.

In the second known version, by contrast, the degassing apparatus comprises substantially a chamber for feeding the molten material followed by a degassing chamber for extracting the gaseous component, which is provided with at least one suction opening which is in communication with means for applying a pressure that is generally less than or equal to the ambient pressure, the two chambers being placed in communication by way of an orifice or a forming die that makes it possible to shape the material in the form of strings in input to the evacuation chamber so as to increase its exposed surface area in order to facilitate the egress and removal of the gaseous component.

In both solutions it is necessary for the suction opening in the degassing chamber in communication with the suction means to remain free in order to allow the degassing apparatus to be regulated. However the molten polymeric material present in the chamber, if it does not transit evenly and/or with a sufficient flow rate through it, tends to settle and collect, with the risk of clogging the suction opening.

In the event of the suction opening becoming clogged, the material in transit through the degassing chamber will not be correctly treated and it will continue to flow to the subsequent stages of processing, resulting in the formation of non-compliant granules which will then need to be discarded, until the operators become aware of the malfunction.

These irregular flow phenomena that tend to cause obstructions are rather frequent, owing to the heterogeneous nature of the plastic material processed which, in addition to having different compositions, has a highly variable apparent density, such that the volumetric flow rate of the material introduced upstream of the degassing apparatus cannot be determined with precision and, as a consequence, it is not possible to regulate the flow rate of material extracted in output from the apparatus.

Typically the operators will become aware of these anomalous situations when the amount of material that has built up inside the degassing chamber increases to the point where the maintenance access doors generally provided on its casing are forced open, therefore a long time after the initial blockage. In these situations it becomes a very complicated matter to find and discard, downstream, the granules which were obtained from material that was not correctly purged of its gaseous component.

However, it is not possible to conduct a visual inspection of the degassing chamber, which must be sealed during operation and does not permit sufficient visibility through transparent portholes, which among other problems would tend to become fouled and opaque over time, owing to the gases and fumes present inside.

Furthermore, it needs to be considered that such conventional apparatuses do not ensure sufficient safety conditions for the operators, who risk physical injury, both in the event of accidental egress of molten plastic material from the apparatus in the event of blockage of the degassing chamber, and also during the execution of manual interventions to free the suction opening when the machine is in operation, owing to the moving parts.

The aim of the present invention is to provide an apparatus for degassing molten plastic material and an associated method for controlling operation that are capable of improving the known art in one or more of the above mentioned aspects.

Within this aim, an object of the invention is to provide an apparatus for degassing molten plastic material and an associated method for controlling operation that prevent phenomena of clogging of the degassing chamber, thus enabling a correct extraction of the gaseous component held in the mass of molten plastic material and preventing the formation downstream of granules of non-compliant material.

Another object of the invention is to provide an apparatus for degassing molten plastic material and an associated method for controlling operation that are efficacious independently of the chemical/physical characteristics of the plastic material treated.

A further object of the present invention is to provide an apparatus for degassing molten plastic material and an associated method for controlling operation that are adaptable to different plant configurations and allow the retrofitting of preexisting plants.

Not least an object of the present invention is to provide an apparatus for degassing molten plastic material and an associated method for controlling operation that improve safety for the operators, by preventing the risk of contact with material at high temperatures or with moving parts.

A further object of the present invention is out to overcome the drawbacks of the background art in a manner that is alternative to any existing solutions.

Another object of the invention is to provide an apparatus for degassing molten plastic material and an associated method for controlling operation that are highly reliable, easy to implement and at low cost.

This aim and these and other objects which will become better apparent hereinafter are achieved by an apparatus for degassing molten plastic material and an associated method for controlling operation according to claim 1, optionally provided with one or more of the characteristics of the dependent claims.

This aim and these and other objects are likewise achieved by a method for controlling the operation of an apparatus according to claim 14 and optionally provided with the characteristics according to claim 15.

Further characteristics and advantages of the invention will become more apparent from the description of two preferred, but not exclusive, embodiments of an apparatus for degassing molten plastic material and of an associated method for controlling operation according to the invention, which are illustrated for the purposes of non-limiting example in the accompanying drawings wherein:
- Figure 1 is a schematic, partially cross-sectional view taken along a longitudinal plane of a first embodiment of the apparatus for degassing molten plastic material according to the invention;
- Figure 2 is a cross-sectional view taken along the line II-II of a portion of the apparatus of Figure 1;
- Figure 3 is a schematic, partially cross-sectional view taken along a vertical plane of a second embodiment of the apparatus according to the invention;
- Figure 4 is a block diagram of the method for controlling operation of the apparatus according to the invention.

With reference to the figures, the reference numeral 1 generally designates the apparatus for degassing molten plastic material according to the invention.

Such apparatus 1 comprises a treatment chamber 2 provided with at least one entry port 3 which is associated in use with supply means 4 for a flow of molten plastic material containing a gaseous component, at least one exit port 5 for the material and at least one suction opening 6 for the at least partial suction of the gaseous component, which is in fluid communication with means for applying a controlled pressure. Such means for applying a controlled pressure, not shown in that they are conventional, can be of the type of a conventional suction pump, a vacuum pump or other device capable of applying a partial vacuum at the at least one suction opening 6 with respect to the internal pressure of the treatment chamber 2 in order to allow the evacuation of the gaseous component embedded in the molten plastic material.

The molten plastic material transits through the treatment chamber 2 from the at least one entry port 3 toward the at least one exit port 5 along a first transit direction D1, and the at least one suction opening 6 is interposed between the ports along the first direction D1.

The apparatus 1 further comprises extraction means 7 for the molten plastic material, which are associated downstream of the at least one exit port 5 for removing the material along a second transit direction D2. Such extraction means 7 comprise a substantially cylindrical jacket 8 extending along the second transit direction D2 and provided with at least one entry opening which is associated in communication with the at least one exit port 5 and at least one exit opening 10, a transfer screw 11 for the molten plastic material, which is supported in rotation about its own longitudinal axis inside the jacket 8 between the entry opening 9 and the exit opening 10, and rotational actuation means 12 for the screw. An annular channel 13 is defined between the outer surface of the transfer screw 11 and the inner wall of the jacket 8 for the passage of the molten plastic material from the entry opening 9 towards the exit opening 10 along the second transit direction D2.

The apparatus further comprises detection means 14 for a measured value P_{MES} referring to the pressure of the molten plastic material inside the annular channel 13, which are functionally associated in input with electronic management and control means adapted to compare the measured value P_{MES} with a reference value P_{REF}. Such electronic management and control means, not shown in that they are conventional, can be of the type of a conventional programmable or programmed electronic board, such as for example a PLC.

Preferably the electronic management and control means are functionally associated in output with the actuation means 12 and with the supply means 4, in order to activate them and modulate their operation as will be described below.

In the preferred embodiment, such detection means 14 comprise at least a pressure sensor 15, so as to execute a direct measurement of the measured pressure value P_{MES}. However, the possibility is not ruled out that the detection means 14 could comprise sensors that are adapted to measure a physical quantity correlated to pressure, so obtaining an indirect measurement of the measured pressure value P_{MES}. In this case the electronic processing and control means can be programmed to process the data detected by the sensor and convert it to the measured pressure value P_{MES}.

The at least one pressure sensor 15 is positioned on the inner wall of the jacket 8 and is adapted to measure the pressure exerted by the molten plastic material against that wall. The pressure value measured by the at least one pressure sensor 15 is correlated to the amount of molten plastic material in transit along the annular channel 13, and makes it possible to monitor the regular flow of the material, by detecting anomalous conditions linked to a buildup of material in the treatment chamber 2 which could cause a blockage of the at least one suction opening 6 and, therefore, a malfunctioning of the entire apparatus 1.

Usefully the jacket 8 has at least one seat 16 for accommodating a corresponding pressure sensor 15 which is open at the inner wall of the jacket, so that the pressure sensor 15 is facing the inside of the annular channel 13.

Preferably the sensitive element of the pressure sensor 15 is arranged substantially coplanar with the inner wall of the jacket 8 or slightly recessed inside the corresponding accommodation seat 16, so as to not protrude into the annular channel 13. In this manner no obstacles to the flow of the molten plastic material are created and the integrity of the pressure sensor 15 is preserved.

In more detail, the at least one pressure sensor 15 is arranged at a distance L from the at least one exit port 5 along the second direction D2 that is less than 10 times the diameter D of the inner wall of the jacket 8. For greater distances the pressure value measured by the at least one pressure sensor 15 would in fact be quite unreliable and insignificant for the purposes of monitoring the conditions of the flow of molten plastic material through the treatment chamber 2.

If there is more than one exit port 5 the distance L is measured from the port closest to the entry opening 9 of the jacket 8.

The transfer screw 11 comprises a shank 17 which extends along a longitudinal axis aligned with the second direction D2 and around which a helical wall 18 protruding toward the jacket 8 extends.

In the preferred embodiment the diameter of the shank 17 is substantially constant at least in a first portion 17a proximal to the entry opening 9, the lumen of the annular channel 13 being substantially constant proximate to that entry opening.

The first portion 17a has a reduced cross-section so as to not induce a compression on the molten plastic material, but simply to impart a thrust on it along the second direction D2.

In the present description the term "substantially" means "except for the usual machining tolerances and tolerances in the assembly of the component parts".

Furthermore, in the preferred embodiment, the diameter of the shank 17 substantially increases along the second direction D2 in a second portion 17b interposed between the entry opening 9 and the exit opening 10, the lumen of the annular channel 13 decreasing in such second portion 17b.

Finally, in the preferred embodiment, the diameter of the shank 17 is substantially constant in a third portion 17c proximal to the exit opening 10, the lumen of the annular channel 13 being substantially constant proximate to that exit opening.

The third portion 17c has a greater transverse cross-section than the first portion 17a and acts as an extruder in order to maintain the fluidity of the molten plastic material by virtue of the high pressures that develop in the annular channel 13 that has a reduced lumen at the third portion, during the transfer along the second direction D2.

The second portion 17b acts as a connection between the first portion 17a and the third portion 17c.

Alternative shape structures of the shank 17 of the transfer screw 11 are not ruled out, however.

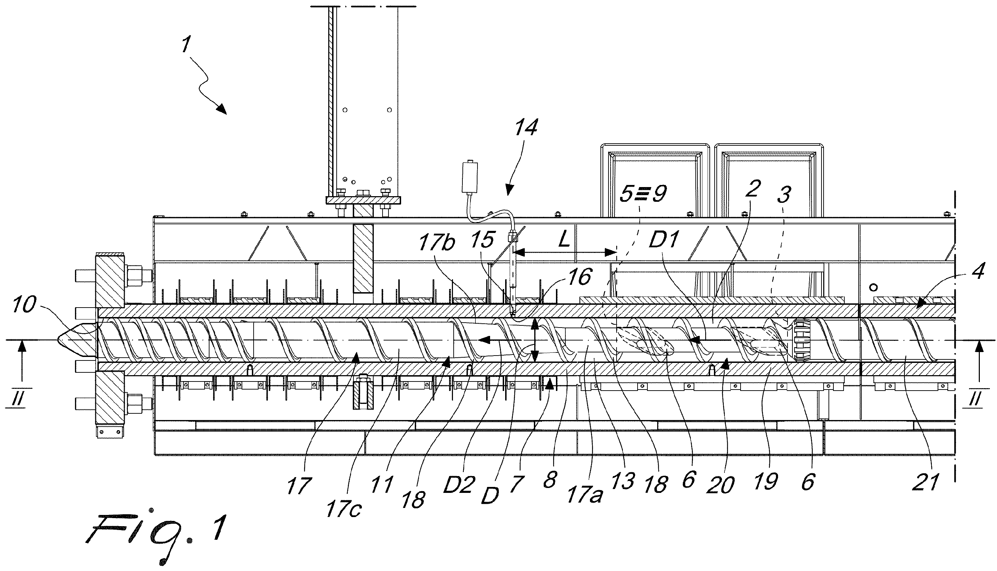

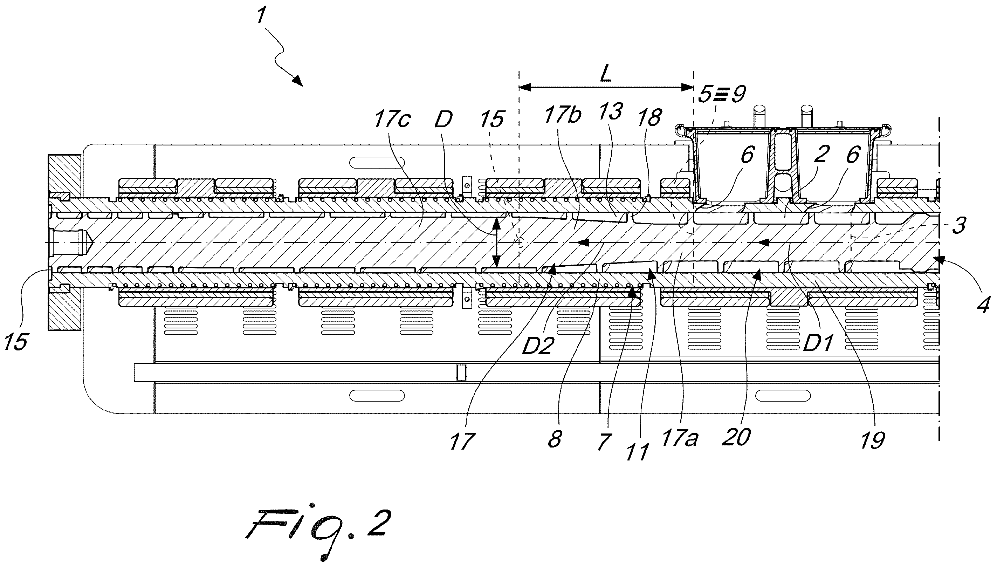

In a first embodiment, shown in Figures 1 and 2, the apparatus 1 comprises a substantially tubular enclosure 19 which extends along the first direction D1 and inside which the treatment chamber 2 is defined. Furthermore, the apparatus 1 comprises a thrust screw 20 with its longitudinal axis arranged along the first direction D1 and supported so as to rotate about that axis inside the enclosure 19. The enclosure 19 defines an entry port 3 and an exit port 5 at its mutually opposite longitudinal ends.

The first direction D1 and the second direction D2 are substantially coincident. The first direction D1 and the second direction D2 are substantially horizontal.

The jacket 8 is substantially tubular and defines an entry opening 9 and an exit opening 10 at its mutually opposite open ends.

The exit port 5 substantially coincides with the entry opening 9. The exit port 5 is arranged at the proximal margin with respect to the extraction means 7 of the at least one suction opening 6. In the embodiment shown, there are two suction openings 6 arranged in series along the first direction D1. The exit port 5 is arranged at the proximal margin of the second suction opening 6 along the first direction D1. The two suction openings 6 are defined in the enclosure 19.

Preferably the enclosure 19 and the jacket 8 are defined integrally in a single piece. Alternatively, the enclosure 19 and the jacket 8 can be mutually connected.

Preferably the thrust screw 20 and the transfer screw 11 are defined integrally in a single piece associated with the actuation means. Alternatively, the thrust screw 20 and the transfer screw 11 can be rendered integral in rotation by means of a mechanical connection.

The supply means 4 comprise an introduction screw 21 arranged upstream of the thrust screw 20, which acts as an extruder in order to obtain a preliminary plasticization of the molten plastic material.

The detection means 14 comprise a pressure sensor 15 arranged at the second portion 17b of the shank 17 of the transfer screw 11. The possibility is not ruled out of there being two or more pressure sensors 15, preferably arranged at the same distance L from the exit port 5.

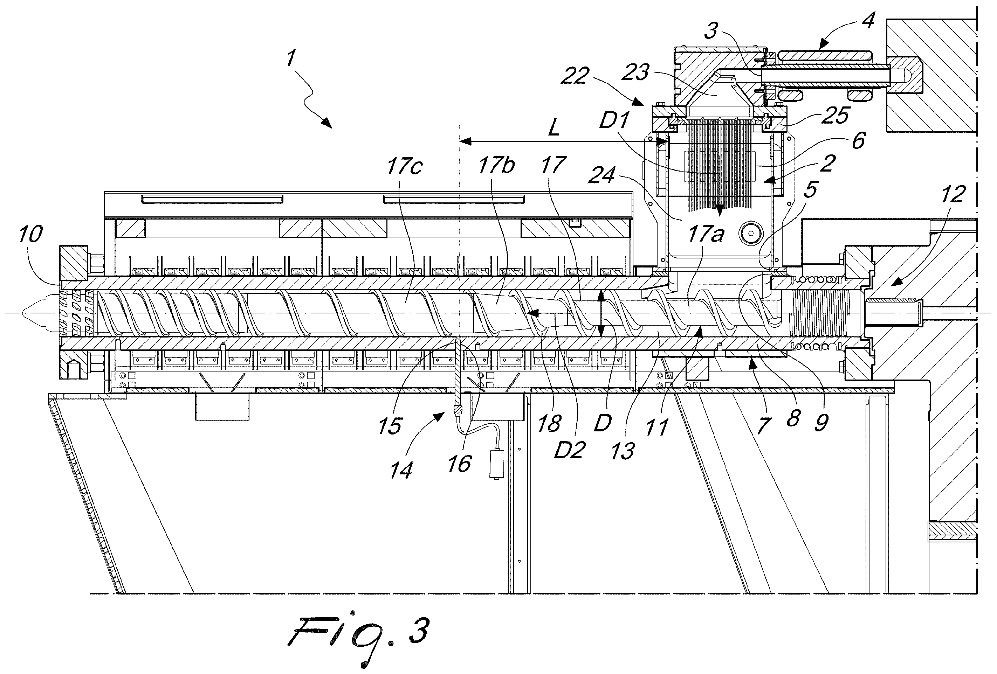

In a second embodiment, shown in Figure 3, the apparatus 1 comprises a substantially box-like body 22 inside which the treatment chamber 2 is defined, the latter being divided into an introduction section 23 for the material which is associable with supply means, not shown, and a degassing section 24 arranged below the introduction section 23, and at least one forming die 25 or an orifice for forming the material in transit, which is accommodated inside the treatment chamber 2 so as to separate the introduction section 23 and the degassing section 24.

An entry port 3 is defined in the upper part of the substantially box-like body 22 and is connected to the introduction section 23, and an exit port 5 is defined on the bottom of the body and is connected to the degassing section 24.

The jacket 8 has an opening on the lateral surface at the exit port 5 which defines the entry opening 9 and, at the opposite end, an open end which defines the exit opening 10.

In this case the first direction D1 and the second direction D2 are not aligned with each other. In the preferred embodiment, the first direction D1 and the second direction D2 are substantially mutually perpendicular. The first direction D1 is substantially vertical. The second direction D2 is substantially horizontal.

A suction opening 6 is defined on the side wall of the box-like body 22 at the degassing section 24.

The supply means, not shown, can comprise for example a screw extruder or a pump.

The detection means 14 comprise a pressure sensor 15 arranged at the third portion 17c of the shank 17 of the transfer screw 11. The possibility is not ruled out of there being two or more pressure sensors 15, preferably arranged at the same distance L from the exit port 5, i.e. from the edge of the exit port 5 closest to the exit opening 10.

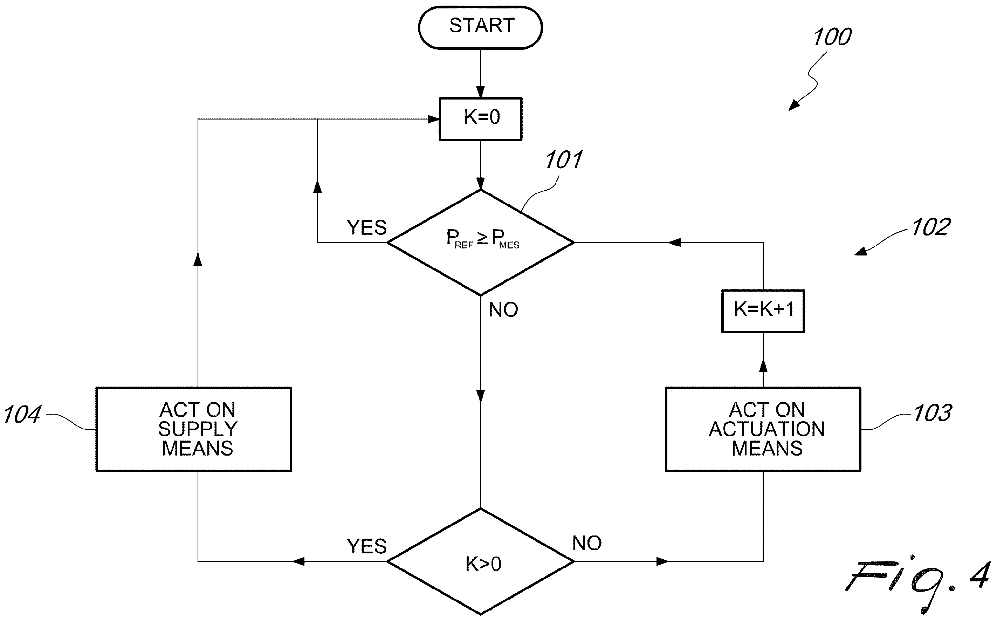

Usefully, according to the invention, the electronic management and control means are programmed to manage the apparatus 1 by executing a method 100 for controlling operation shown schematically in Figure 4.

Such method 100 comprises the following steps:
- acquiring the measured value P_{MES} from the detection means 14,
- comparing 101 the measured value P_{MES} with a set or settable reference value P_{REF},
- if the measured value P_{MES} is greater than the reference value P_{REF}, performing a corrective procedure 102 which comprises at least one of the following actions: acting on the actuation means 103 to increase the rotation rate of the transfer screw 11 or acting on the supply means 104 to reduce the flow rate of molten plastic material entering the treatment chamber 2.

These steps are repeated cyclically.

In this manner, when the measured value P_{MES} exceeds the reference value P_{REF} in the presence of a buildup of molten plastic material in the treatment chamber 2 that is such as to risk a blockage of the at least one suction opening 6, the flow rate of material in output from the treatment chamber is increased and/or the flow rate of material in input to that chamber is reduced, until a measured value P_{MES} is detected that is lower than the reference value P_{REF}.

The reference value P_{REF} can determined with experimental tests as a function of the type of plastic material being processed, the working conditions, and the distance L at which the at least one sensor 15 is positioned.

In more detail the corrective procedure 102 comprises the following sequence of steps:
- performing a first intervention on the actuation means 103 to increase the rotation rate of the transfer screw 11,
- performing a further comparison 101 between the measured value P_{MES} and the reference value P_{REF} and
- if the measured value P_{MES} is still greater than the reference value P_{REF}, performing a second intervention on the supply means 104 to reduce the flow rate of molten plastic material entering the treatment chamber 2.

In practice it has been found that the invention fully achieves the intended aim and objects by providing an apparatus for degassing molten plastic material and an associated method for controlling operation that make it possible to prevent phenomena of clogging of the treatment chamber, thus enabling a correct extraction of the gaseous component held in the mass of molten plastic material and preventing the formation downstream of granules of non-compliant material.

Furthermore the invention is efficacious independently of the chemical/physical characteristics of the plastic material treated.

Moreover it is possible to provide newly-built apparatuses according to the invention, as well as retrofitting existing apparatuses by providing adapted detection means which are functionally connected to an electronic management and control unit which is programmed to perform the control method according to the invention.

Furthermore the apparatus according to the invention makes it possible to improve safety conditions for the operators, by reducing, if not eliminating, the risk of physical injury owing to contact with molten plastic material or with moving parts as a consequence of blockages.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102025000007095 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An apparatus (1) for degassing molten plastic material comprising:
a treatment chamber (2) provided with at least one entry port (3) associable with supply means (4) for a flow of molten plastic material containing a gaseous component, at least one exit port (5) for said material and at least one suction opening (6) for the at least partial suction of the gaseous component which is in fluid communication with means for applying a controlled pressure, the molten plastic material being in transit through the treatment chamber (2) from the at least one entry port (3) toward the at least one exit port (5) along a first transit direction (D1) and the at least one suction opening (6) being interposed between said entry and exit ports along the first transit direction (D1), and
extraction means (7) for the molten plastic material which are associated downstream of said at least one exit port (5) for removing said material along a second transit direction (D2), and which comprise a substantially cylindrical jacket (8) extending along said second transit direction (D2) and provided with at least one entry opening (9) which is associated in communication with said at least one exit port (5) and at least one exit opening (10), a transfer screw (11) for the molten plastic material, which is supported in rotation about its own longitudinal axis inside said jacket (8) between said entry opening (9) and said exit opening (10), and rotational actuation means (12) for said screw, an annular channel (13) being defined between the outer surface of the transfer screw (11) and the inner wall of the jacket (8) for the passage of the molten plastic material from the entry opening (9) towards the exit opening (10) along the second transit direction (D2),
**characterized in that** it comprises detection means (14) for a measured value (P_{MES}) referring to the pressure of the molten plastic material inside said annular channel (13), which are functionally associated in input with electronic management and control means adapted to compare said measured value (P_{MES}) with a reference value (P_{REF}).

2. The apparatus (1) according to claim 1, **characterized in that** said detection means (14) comprise at least one pressure sensor (15).

3. The apparatus (1) according to claim 2, **characterized in that** said at least one pressure sensor (15) is positioned on the inner wall of said jacket (8), the sensor (15) being adapted to measure the pressure exerted by the molten plastic material against said inner wall.

4. The apparatus (1) according to one or more of the preceding claims, **characterized in that** said jacket (8) comprises at least one seat (16) for accommodating said at least one pressure sensor (15) which is open at the inner wall of said jacket, the pressure sensor (15) facing the inside of the annular channel (13).

5. The apparatus (1) according to one or more of the preceding claims, **characterized in that** said at least one pressure sensor (15) is arranged at a distance (L) from said at least one exit port (5), measured along said second transit direction (D2), that is less than 10 times a diameter (D) of the inner wall of said jacket (8).

6. The apparatus (1) according to one or more of the preceding claims, **characterized in that** said transfer screw (11) comprises a shank (17) which has a substantially constant diameter in at least one first portion (17a) which is proximal to said entry opening (9), the lumen of the annular channel (13) being substantially constant at least at said first portion.

7. The apparatus (1) according to one or more of claims 1-5, **characterized in that** said transfer screw (11) comprises a shank (17) which has a diameter that substantially increases along said second transit direction (D2) at least at a second portion (17b) arranged between said entry opening (9) and said exit opening (10), the lumen of the annular channel (13) decreasing along said second portion.

8. The apparatus (1) according to one or more of claims 1-5, **characterized in that** said transfer screw (11) comprises a shank (17) which has a substantially constant diameter in at least one third portion (17c) which is proximal to said exit opening (10), the lumen of the annular channel (13) being substantially constant at least at said third portion.

9. The apparatus (1) according to one or more of the preceding claims, **characterized in that** said electronic management and control means are functionally associated in output with said actuation means (12).

10. The apparatus (1) according to one or more of the preceding claims, **characterized in that** said electronic management and control means are functionally associable in output with said supply means (4).

11. The apparatus (1) according to one or more of the preceding claims, **characterized in that** said second transit direction (D2) is substantially horizontal.

12. The apparatus (1) according to one or more of the preceding claims, **characterized in that** it comprises a substantially tubular enclosure (19) extending along said first transit direction (D1) and inside which said treatment chamber (2) is defined, and a thrust screw (20) for the molten plastic material, which is supported so as to rotate about its own longitudinal axis along said chamber, the first and second transit directions (D1, D2) being substantially coincident and the exit port (5) of the treatment chamber (2) being arranged at the proximal margin of the at least one suction opening (6) with respect to the extraction means (7).

13. The apparatus (1) according to one or more of claims 1-11, **characterized in that** it comprises a substantially box-like body (22) inside which said treatment chamber (2) is defined, the latter being divided into an introduction section (23) for the molten plastic material which is associable with said supply means (4) and a degassing section (24) arranged below said introduction section (23), and at least one forming die (25) for the material in transit, which is accommodated inside said treatment chamber (2) so as to separate said introduction section (23) and said degassing section (24), the first and second transit directions (D1, D2) being unaligned with each other.

14. A method (100) for controlling the operation of an apparatus (1) according to one or more of the preceding claims, **characterized in that** it comprises the following steps:
- acquiring said measured value (P_{MES}) from said detection means (14),
- comparing (102) said measured value (P_{MES}) with said reference value (P_{REF}) and
- if said measured value (P_{MES}) is greater than said reference value (P_{REF}), performing a corrective procedure (102) which comprises at least one of the following actions: acting on said actuation means (103) to increase the rotation rate of said transfer screw (11) or acting on said supply means (104) to reduce the flow rate of molten plastic material entering said treatment chamber (2),
said steps being repeated cyclically.

15. The method (100) according to claim 14, **characterized in that** said corrective procedure (102) comprises the following sequence of steps:
- acting on said actuation means (103) to increase the rotation rate of said transfer screw (11),
- performing a further comparison (101) between said measured value (P_{MES}) and said reference value (P_{REF}) and
- if said measured value (P_{MES}) is still greater than said reference value (P_{REF}), acting on said supply means (104) to reduce the flow rate of molten plastic material entering said treatment chamber (2).
